# FASCICULE DE BREVET EUROPEEN

(11) **EP 4 191 110 B1**
(45) Date de publication et mention de la délivrance du brevet: **12.06.2024**
(21) Numéro de dépôt: 22207489.0
(22) Date de dépôt: 15.11.2022
(51) Int. Cl.: F16L 11/12, C08F 210/02, C08F 218/02, F16L 11/08, B32B 1/08, B32B 27/08, B32B 27/12, B32B 27/30, B32B 27/32, B32B 5/02, C08K 3/22, C08K 3/36, C08K 5/00, C08L 23/08, C08L 31/04

(54) **TUYAU POUR LE TRANSPORT D'UN FLUIDE POUR UN VEHICULE**
ROHR ZUM TRANSPORT EINES FLUIDS FÜR EIN FAHRZEUG
PIPE FOR TRANSPORTING A FLUID FOR A VEHICLE

(30) Priorité: 01.12.2021 FR 2112816
(43) Date de publication de la demande: 07.06.2023
(73) Titulaire: HUTCHINSON, 75008 Paris (FR)
(72) Inventeur: BIERCE ARGY, Gwenaelle, 45210 FERRIERES EN GATINAIS (FR)
(74) Mandataire: Gevers & Orès

(56) Documents cités:
- EP-A1- 3 685 999
- GB-A- 2 545 440
- US-A1- 2018 313 489
- US-A1- 2020 182 381

## Description

### Domaine technique de l'invention

L'invention concerne le domaine des tuyaux pour le transport d'un fluide, par exemple un fluide de refroidissement, pour les véhicules, tels que les véhicules automobiles.

L'invention concerne plus particulièrement le domaine des tuyaux pour le transport d'un fluide de refroidissement pour un circuit de refroidissement basse température et basse pression pour les véhicules automobiles.

### Arrière-plan technique

L'état de la technique est illustré par les documents GB-A-2 545 440, EP-A1-3 685 999, US-A1-2018/313 489, US-A1-2020/182 381.

Un véhicule automobile comprend classiquement un circuit de refroidissement, notamment un circuit basse température et basse pression. Par basse température et basse pression, il est entendu une température à l'intérieur du circuit comprise entre -30°C et 120°C et une pression à l'intérieur du circuit comprise entre 1.10⁵ Pa et 5.10⁵ Pa. Le circuit de refroidissement met en oeuvre des tuyaux de transport d'un fluide de refroidissement. Le fluide de refroidissement est par exemple un liquide caloporteur tel qu'un liquide à base de glycol.

De tels tuyaux doivent répondre à différentes contraintes qui complexifient le choix des matériaux pouvant composer ces tuyaux.

En effet, le tuyau doit présenter des caractéristiques de résistance vis-à-vis du fluide transporté dans les conditions de température et de pression données. Le matériau du tuyau doit donc être résistant aux espèces chimiques composants le liquide de refroidissement dans les conditions de pression et de température de transport du fluide afin de garantir l'étanchéité du tuyau sur une période de temps donnée.

Par ailleurs, le tuyau doit présenter des propriétés mécaniques compatibles avec l'environnement dans lequel il est mis en oeuvre. En particulier, le matériau du tuyau doit être suffisamment souple afin de fournir des tuyaux présentant des formes complexes adaptées à l'encombrement du véhicule. Aussi, le tuyau doit être capable d'amortir les vibrations afin de garantir l'intégrité du circuit sur la période de temps donnée.

En outre, le tuyau doit être résistant au feu. Le matériau mis en oeuvre dans le tuyau doit notamment répondre à la norme 94 des Underwriters Laboratories (UL94). La norme 94 présente deux grandes catégories de test qui permettent de qualifier la résistance au feu d'un matériau polymérique. La première catégorie concerne un test de combustion horizontal (HB, pour « Horizontal Burning » en langue anglaise) et la seconde catégorie concerne un test de combustion vertical qui est plus sévère que le test de combustion horizontal. Dans le cadre du test de combustion vertical, plusieurs critères permettent de classer les matériaux polymériques selon l'indice V-0, V-1 ou V-2. Les constructeurs automobiles requièrent aujourd'hui des matériaux répondant au moins au test de combustion vertical de la norme UL 94 selon l'indice V-0.

Afin de répondre à toutes les conditions requises, de tels tuyaux sont classiquement formés d'une pluralité de couches concentriques. Chaque couche assure une fonction spécifique. Typiquement, le tuyau comprend une couche interne définissant un passage interne de circulation du fluide et une couche externe de protection. La couche interne doit présenter la résistance au fluide de refroidissement tandis que la couche externe doit présenter la résistance au feu selon la norme UL94 V-0. Enfin, la combinaison de ces couches doit présenter la souplesse nécessaire permettant au tuyau d'amortir les vibrations.

Certains matériaux polymériques de type thermoplastiques sont connus comme répondant aux conditions la norme UL94 V-0. Ces matériaux présentent un niveau de résistance au feu conforme à la norme précitée. Cependant, l'utilisation de thermoplastiques dans le domaine de l'invention ne procure pas entière satisfaction. En effet, les thermoplastiques présentent une souplesse et une résistance aux vibrations insuffisantes pour leur utilisation comme couche externe dans de tels tuyaux.

Dans ce cadre, il existe un besoin de fournir un tuyau pour le transport d'un fluide, en particulier de refroidissement, pour un véhicule, qui soit résistant au feu, au fluide transporté et qui présente les propriétés mécaniques requises.

### Résumé de l'invention

A cet effet, l'invention propose un tuyau pour le transport d'un fluide, en particulier de refroidissement, pour un véhicule, le tuyau ayant une structure multicouches et comprenant :
- une couche interne définissant un passage interne de circulation du fluide, la couche interne étant formée d'un premier matériau comprenant un élastomère choisi parmi les copolymères d'éthylène-propylène,
- une couche externe formée d'un second matériau comprenant :
- un élastomère choisi parmi les copolymères d'éthylène-acétate de vinyle selon une proportion d'au moins 50 pce, et
- une charge ignifugeante selon une proportion d'au moins 50 pce, le tuyau (1) comprend une couche intermédiaire de liaison agencée entre la couche interne et la couche externe et comportant un mélange d'un copolymère d'éthylène-propylène avec un copolymère d'éthylène-acétate de vinyle ou un polyacrylate ou un copolymère d'éthylène acrylate.

Le tuyau selon l'invention présente ainsi une couche interne en élastomère choisi parmi les copolymères d'éthylène-propylène. Les copolymères d'éthylène-propylène présentent l'avantage d'être résistants au fluide de refroidissement transporté dans les conditions de température et de pression d'un circuit de refroidissement, notamment un circuit basse pression, basse température. Aussi, de tels élastomères présentent l'avantage de garantir une souplesse de la couche interne compatible avec les vibrations.

Le tuyau comprend en outre une couche externe formée d'un second matériau comprenant un élastomère choisi parmi les copolymères d'éthylène-acétate de vinyle selon une proportion massique d'au moins 50 pce. L'élastomère composant le second matériau est donc majoritairement un copolymère d'éthylène-acétate de vinyle. Il a été constaté que, contrairement au copolymère d'éthylène-propylène, un tel élastomère présente l'avantage de résister au feu. Aussi, il a été constaté qu'un tel élastomère présente une tenue thermique remarquable ce qui permet de garantir l'intégrité de la couche externe dans les conditions de température d'utilisation du tuyau.

En outre, le second matériau composant la couche externe comprend une charge ignifugeante selon une proportion d'au moins 50 pce. La charge ignifugeante permet d'améliorer la résistance au feu de la couche externe. Il a été constaté que, dans une telle proportion, la résistance au feu de la couche externe était nettement améliorée sans dégrader la souplesse de la couche externe. La couche externe selon l'invention est notamment conforme au test de combustion vertical de la norme UL 94 selon l'indice V-0.

En outre, selon l'invention, le tuyau comprend une couche intermédiaire de liaison. La couche intermédiaire de liaison permet de renforcer l'adhésion des couches interne et externe qui sont formées de deux élastomères distincts. La cohésion du tuyau est assurée par la présence de cette couche. Le tuyau selon l'invention comprend donc des couches en élastomère qui permettent de garantir une souplesse suffisante pour résister par exemple aux vibrations. En outre, le tuyau selon l'invention est résistant aux espèces chimiques composant le fluide transporté et au feu tel que requis par la norme UL94 V-0.

L'invention peut comprendre une ou plusieurs des caractéristiques suivantes, prises isolément les unes des autres ou en combinaison les unes avec les autres :
- la charge ignifugeante est choisie parmi les hydroxydes métalliques, par exemple l'hydroxyde d'aluminium ou l'hydroxyde de magnésium ou un mélange de ceux-ci,
- la charge ignifugeante est choisie parmi les composés phosphorés, par exemple les composés organophosphorés ou les composés phosphorés azotés ou les chlorophosphates ou les phosphinates métalliques ou un mélange de ceux-ci,
- la proportion de charge ignifugeante est d'au moins 70 pce, préférentiellement d'au moins 100 pce,
- le second matériau comprend des charges de renfort,
- les charges de renfort comprennent de la silice suivant une proportion inférieure ou égale à 50 pce, préférentiellement inférieure ou égale à 40 pce,
- le second matériau comprend des additifs, la proportion de chaque additif étant inférieure ou égale à 10 pce, préférentiellement inférieure ou égale à 5 pce,
- les additifs comprennent du noir de carbone,
- le second matériau est vulcanisé au peroxyde,
- le second matériau est exempt d'élastomère choisi parmi les copolymères d'éthylène-propylène,
- le copolymère d'éthylène-propylène du premier matériau est un terpolymère d'éthylène-propylène et d'un diène non conjugué,
- la proportion du copolymère d'éthylène-propylène du premier matériau est de 100 pce,
- la proportion de l'éthylène-acétate de vinyle du second matériau est d'au moins 70 pce, préférentiellement de 100 pce,
- une couche de renfort agencée entre la couche externe et la couche intermédiaire ou noyée dans la couche externe.

L'invention concerne également un circuit de refroidissement pour un véhicule, comprenant un tuyau selon l'une quelconque des caractéristiques précédentes.

L'invention concerne également un procédé de fabrication d'un tuyau tel que décrit ci-dessus, caractérisé en ce qu'il comprend les étapes suivantes : former la couche interne, former la couche intermédiaire autour de la couche interne, former la couche externe, et vulcaniser les couches interne, intermédiaire et externe.

Avantageusement, le procédé comprend, après l'étape de vulcanisation, une étape de post-cuisson du tuyau .

L'invention concerne également l'utilisation d'un tuyau selon l'une quelconque des caractéristiques précédentes, pour le transport d'un fluide de refroidissement.

### Brève description des figures

D'autres caractéristiques et avantages ressortiront de la description qui suit d'un mode de réalisation non limitatif de l'invention en référence aux dessins annexés sur lesquels :
la figure 1 est une représentation schématique en perspective d'un tuyau selon un exemple de réalisation de l'invention ;
la figure 2 est un schéma synoptique d'un procédé de fabrication du tuyau de la figure 1.

### Description détaillée de l'invention

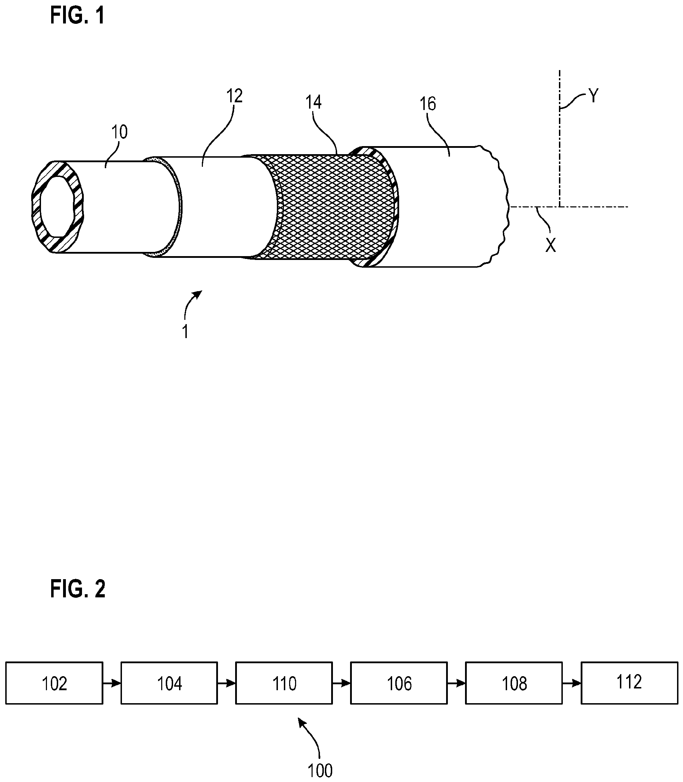

La figure 1 représente un tuyau 1 selon un exemple de réalisation de l'invention. Le tuyau 1 présente un axe longitudinal X.

Dans la présente invention, les termes « intérieur », « interne », « extérieur », « externe », s'entendent par rapport à un axe transversal Y perpendiculaire à l'axe longitudinal X, et par rapport à l'éloignement de l'axe longitudinal X le long de cet axe transversal Y. Les termes « extérieur » et « externe » s'étendent comme relativement plus éloigné de l'axe longitudinal X le long de l'axe transversal Y, tandis que les termes « interne », « intérieur » s'étendent comme relativement plus proche de l'axe longitudinal X le long de l'axe transversal Y.

Dans la présente invention, l'unité « pce » désigne de manière connue une unité de mesure définissant la proportion en poids d'un constituant d'un matériau pour cent parties en poids d'élastomère dans le matériau. Ainsi, un matériau comprenant une charge selon une proportion de 70 pce fait référence à un matériau comprenant 70g de charge pour 100g d'élastomère. Le tuyau 1 est destiné au transport d'un fluide. Le fluide est par exemple un fluide de refroidissement. Le fluide est par exemple un liquide de refroidissement. Le liquide de refroidissement est par exemple un liquide à base de glycol. Le liquide de refroidissement comprend par exemple un mélange d'eau et de glycol.

Le fluide transporté est par exemple à une pression comprise entre 1.10⁵ Pa et 5.10⁵ Pa et à une température comprise entre -30°C et 120°C.

La température à l'extérieur du tuyau 1 est par exemple comprise entre-30°C et 150°C.

Le tuyau 1 est multicouches. Il comprend une pluralité de couches concentriques autour de l'axe longitudinal X.

Le tuyau 1 présente par exemple un diamètre interne compris entre 10 mm et 100 mm et préférentiellement compris entre 10 mm et 50 mm.

Le tuyau 1 comprend une couche interne 10 définissant un passage interne de circulation du fluide. La couche interne 10 présente une épaisseur telle que mesurée selon l'axe transversal Y comprise entre 0.5 mm et 5 mm.

La couche interne 10 est formée d'un premier matériau comprenant un élastomère choisi parmi copolymères d'éthylène-propylène.

Préférentiellement, le copolymère d'éthylène-propylène est un terpolymère d'éthylène-propylène et d'un diène non conjugué (EPDM).

Le diène non conjugué est par exemple le dicyclopentadiène, le 1,4-hexadiène, le 5-éthylidène-2- norbornène, le 5-méthylène-2-norbornène, le 1,5-cyclooctadiène. Avantageusement, le diène non conjugué est le 5-éthylidène-2-norbornène. Avantageusement, les unités diène non conjugué représentent entre 0.5% et 20% en masse de l'élastomère.

Avantageusement, les unités de propylène représentent entre 10% et 80%, préférentiellement de 15% à 70% en masse de l'élastomère.

Avantageusement, les unités éthylène représentent entre 20% et 90%, préférentiellement entre 30% et 70% en masse de l'élastomère.

Préférentiellement, le premier matériau comprend un mélange d'élastomères choisis parmi les terpolymères d'éthylène-propylène et d'un diène non conjugué. Les terpolymères d'éthylène-propylène et d'un diène non conjugué du premier matériau peuvent se différencier par exemple par la proportion des unités diène non conjugué et/ou la proportion des unités de propylène et/ou la proportion des unités d'éthylène.

Préférentiellement, la proportion d'élastomère dans le premier matériau est de 100 pce.

Les copolymères d'éthylène-propylène présentent l'avantage de résister au fluide de refroidissement dans les conditions de température et de pression précitées. En effet, certains élastomères tels que les copolymères d'éthylène et d'acétate de vinyle (EVA) gonflent en présence du fluide de refroidissement dans les conditions de température et de pression précitées traduisant une mauvaise résistance du matériau vis-à-vis du fluide transporté.

Préférentiellement, le premier matériau comprend en outre des charges de renfort. La proportion des charges de renfort dans le premier matériau est comprise entre 50 pce et 200 pce. Les charges de renfort comprennent par exemple du noir de carbone, de la silice, du kaolin, de la craie ou un mélange de ceux-ci. Les charges de renfort se présentent sous la forme de nanoparticules.

Préférentiellement, le premier matériau comprend en outre des additifs. La proportion d'additifs dans le premier matériau est comprise entre 100 pce et 250 pce. Les additifs comprennent par exemple des plastifiants, ou des pigments, des agents de protection tels que des antioxydants.

Le premier matériau est avantageusement vulcanisé. Le premier matériau peut être vulcanisé au peroxyde ou au soufre. Préférentiellement, le premier matériau est vulcanisé au peroxyde. Le premier matériau comprend ainsi des agents de vulcanisation comprenant un peroxyde. Le peroxyde est par exemple choisi parmi le 1,3 1,4bis(terbutylperoxyisopropyl)benzène, le peroxyde de di-(2 tertiobutyl isopropyl) benzène, un peroxyde de dicumyle et le (1,1' di tertiobutylperoxy)-3,3,5-triméthylcyclohexane. Le premier matériau comprend avantageusement des activateurs de vulcanisation comprenant par exemple du cyanurate tel qu'un cyanurate de triallyle (TAC) ou un triallyl isocyanurate (TAIC).

Le tuyau 1 selon l'invention comprend en outre une couche externe 16. La couche externe 16 est agencée à l'extérieur de la couche interne 10. Les couches externe et interne 16, 10 sont coaxiales. Préférentiellement, la couche externe 16 est la couche la plus externe 16 du tuyau 1. La couche externe 16 présente une épaisseur telle que mesurée selon l'axe transversal Y comprise entre 0.5 mm et 5 mm.

La couche externe 16 est conforme au moins au test de combustion vertical de la norme UL94, et notamment à l'indice V-0 (Norme UL 94, publié le 14 Février 2013).

La couche externe 16 est formée d'un second matériau. Le second matériau diffère du premier matériau. Le second matériau comprend un élastomère selon une proportion d'au moins 50 pce, préférentiellement d'au moins 70 pce et encore plus préférentiellement de 100 pce.

Selon l'invention, l'élastomère du second matériau est choisi parmi les copolymères d'éthylène et d'acétate de vinyle (EVA). Par copolymère d'éthylène et d'acétate de vinyle on entend tout copolymère à base de ces deux monomères comme composants principaux ou majoritaires.

Préférentiellement, les unités d'acétate de vinyle représentent au moins 50% en poids de l'élastomère et préférentiellement 60% en poids de l'élastomère. Le second matériau peut comprendre un mélange de copolymères d'éthylène et d'acétate de vinyle, les copolymères d'éthylène et d'acétate de vinyle se différenciant par exemple par la proportion en poids d'unités d'acétate de vinyle.

Préférentiellement, le second matériau comprend une proportion totale d'élastomère de 100 pce. Ainsi, préférentiellement, le second matériau comprend majoritairement en tant qu'élastomère un copolymère d'éthylène et d'acétate de vinyle.

Préférentiellement, le second matériau est exempt de copolymères d'éthylène-propylène et notamment de terpolymères d'éthylène-propylène et d'un diène non conjugué. En effet, ces élastomères présentent une mauvaise tenue au feu et il a été constaté que la présence de cette famille d'élastomère dans le second matériau dégrade grandement la résistance au feu de la couche externe 16.

Selon l'invention, le second matériau comprend en outre une charge ignifugeante selon une proportion d'au moins 50 pce, préférentiellement d'au moins 70 pce et encore plus préférentiellement de 100 pce.

La charge ignifugeante permet de renforcer la résistance au feu de la couche externe 16. Avantageusement, la proportion de charge ignifugeante est comprise entre 50 pce et 100 pce. Au-delà de 100 pce, il a été constaté que les propriétés mécaniques de la couche externe 16 sont fortement dégradées. En dessous de 50 pce, il a été constaté que la résistance au feu de la couche externe 16 n'est pas satisfaisante.

La charge ignifugeante se présente par exemple sous la forme de microparticules. Les microparticules présente avantageusement une D50 comprise entre 0.5 µm et 1 µm, préférentiellement une D50 de 0.9 µm telle que mesurée par diffraction laser.

Selon un exemple préféré de l'invention, la charge ignifugeante est choisie parmi les hydroxydes métalliques tels que l'hydroxyde d'aluminium (Al(OH)₃), ou l'hydroxyde de magnésium (Mg(OH)₂) ou un mélange de ceux-ci.

Selon un autre exemple de l'invention, la charge ignifugeante est choisie parmi les composés phosphorés. Selon la présente invention, un composé phosphoré est un composé comprenant au moins un atome de phosphore. Les composés phosphorés sont par exemple des composés organophosphorés tels qu'un phosphate, ou des composés phosphorés azotés, ou des chlorophosphates, ou des phosphinates métalliques ou un mélange de ceux-ci.

Selon un autre exemple de l'invention, la charge ignifugeante est choisie parmi les composés halogénés tels qu'un polybromodiphényléther (PBDE) en combinaison avec un oxyde d'antimoine.

Selon encore un autre exemple de l'invention, la charge ignifugeante comprend un mélange d'hydroxydes métalliques, de composés phosphorés et de composés halogénés.

Avantageusement, le second matériau comprend en outre un retardateur de flamme selon une proportion par exemple inférieure à 5 pce. Le retardateur de flamme comprend par exemple du stéarate de calcium selon une proportion par exemple de 1.5 pce.

Selon un exemple préféré de l'invention, le second matériau comprend des charges de renfort. La proportion des charges de renfort dans le second matériau est préférentiellement inférieure à 50 pce. Les charges de renfort se présentent sous la forme de nanoparticules. Les charges de renfort comprennent par exemple du kaolin, de la craie, de la silice ou un mélange de ceux-ci.

La proportion de silice dans le second matériau est inférieure ou égale à 50 pce, préférentiellement inférieure ou égale à 40 pce, préférentiellement de 35 pce. La silice est par exemple de la silice précipitée.

Préférentiellement, le second matériau comprend en outre des additifs. La proportion de chaque additif dans le second matériau est inférieure ou égale à 10 pce, préférentiellement inférieure ou égale à 5 pce. Les additifs comprennent par exemple des pigments, des agents de protection tels que des antioxydants, des agents de couplage.

A titre de pigments on peut citer le noir de carbone selon une proportion inférieure ou égale à 10 pce, préférentiellement inférieure ou égale à 5 pce. Le noir de carbone est par exemple de la série N550. La faible proportion en noir de carbone permet d'améliorer la résistance au feu de la couche externe 16 puisque le noir de carbone représente un combustible qui dégrade la tenue au feu.

A titre d'antioxydants on peut citer le 2,2,4-trimethyl-1,2-dihydroquinoline selon une proportion de 1.5 pce. L'antioxydant est par exemple le Permanax TMQ.

A titre d'agents de couplage on peut citer les composés silanes fonctionnalisés.

A titre d'exemple, les additifs peuvent également comprendre un composé stéaramine selon une proportion de 1 pce tel que l'Armeen 18D, un agent de moulage tel que l'agent Moulex^{®} RI 04 selon une proportion de 0.8 pce et/ou un agent de mise en oeuvre tel que l'acide stéarique selon une proportion de 1 pce.

Le second matériau est vulcanisé. Le second matériau peut être vulcanisé au soufre. Préférentiellement, le second matériau est vulcanisé au peroxyde. Le second matériau comprend ainsi des agents de vulcanisation comprenant un peroxyde. La proportion de peroxyde est comprise entre 1 pce et 10 pce, préférentiellement entre 2 pce et 5 pce et encore plus préférentiellement de 3 pce. Le peroxyde est choisi par exemple parmi les peroxydes organiques. Le second matériau comprend avantageusement des activateurs de vulcanisation selon une proportion inférieure à 5 pce. Les activateurs de vulcanisation comprennent par exemple du cyanurate tel qu'un cyanurate de triallyle (TAC) ou un triallyl isocyanurate (TAIC) ou un mélange de trimethylolpropane trimethacrylate et de silice tel que le composé Rhenofit^{®} TRIM/S commercialisé par LANXESS selon une proportion comprise entre 0.5 pce et 2 pce, par exemple de 1 pce.

Le tuyau 1 comprend en outre une couche intermédiaire 12 de liaison agencée entre la couche interne 10 et la couche externe 16. Les couches interne et externe 10, 16 sont formées de matériaux élastomères de nature différente. La couche intermédiaire 12 a donc pour fonction d'assurer la liaison entre les couches interne et externe 10, 16. La couche intermédiaire présente une épaisseur telle que mesurée selon l'axe transversal Y comprise entre 0.1 mm et 2 mm. La couche intermédiaire 12 est formée d'un troisième matériau comportant un mélange d'élastomères d'un copolymère d'éthylène-propylène, en particulier d'un terpolymère d'éthylène-propylène et d'un diène non conjugué (EPDM), avec l'un des élastomères suivants :
- un copolymère d'éthylène acétate de vinyle (EVA), ou
- un polyacrylate (ACM), ou
- un copolymère d'éthylène acrylate (AEM).

Le copolymère d'éthylène acrylate est par exemple le VAMAC^{®} D.

Avantageusement, les proportions d'EPDM et d'EVA, ou d'ACM ou d'AEM dans le troisième matériau sont égales.

Le troisième matériau est avantageusement vulcanisé au peroxyde ou au soufre. Le peroxyde est par exemple choisi parmi le 1,3 1,4bis(terbutylperoxyisopropyl)benzène, le peroxyde de di-(2 tertiobutyl isopropyl) benzène, un peroxyde de dicumyle et le (1,1' di tertiobutylperoxy)-3,3,5-triméthylcyclohexane. Le premier matériau comprend avantageusement des activateurs de vulcanisation comprenant par exemple du cyanurate tel qu'un cyanurate de triallyle (TAC) ou un triallyl isocyanurate (TAIC).

Préférentiellement, le tuyau 1 comprend en outre une couche de renfort 14. La couche de renfort 14 permet de renforcer le tuyau 1 contre les efforts radiaux internes liés à la pression du fluide. La couche de renfort 14 est une couche tubulaire par exemple agencée entre la couche intermédiaire 12 et la couche externe 16. Selon un autre exemple de réalisation, la couche de renfort 14 est noyée dans la couche externe 16. Selon ce mode de réalisation, la couche de renfort 14 est agencée dans l'épaisseur de la couche de la couche externe 16.

La couche de renfort 14 est une couche textile. La couche textile est par exemple une couche textile tricotée. La couche de renfort 14 comprend des fils. Les fils sont par exemple des fils de polyamide (PA) et notamment de polyamide aromatique ou de polytéréphtalate d'éthylène (PET) ou de polyester ou de rayonne. Les fils présentent par exemple un titre compris entre 1000 dtex et 4000 dtex.

Le tuyau 1 selon l'invention équipe par exemple un moteur d'un véhicule. Le moteur est par exemple un moteur à combustion interne, électrique, hybride ou hydrogène.

Le véhicule est par exemple un véhicule automobile. Le tuyau 1 selon l'invention compose par exemple un circuit de refroidissement pour un tel véhicule. Le circuit de refroidissement est par exemple un circuit basse pression et basse température.

Selon un autre exemple, le véhicule est un véhicule aérien, tel qu'un aéronef, ou encore un véhicule maritime.

Un procédé 100 de fabrication du tuyau 1 selon l'invention va maintenant être décrit en référence à la figure 2.

Le procédé 100 comprend les étapes suivantes :
(102) former la couche interne 10,
(104) former la couche intermédiaire 12 autour de la couche interne 10,
(106) former la couche externe 16.

Les couches interne, intermédiaire et externe 10, 12, 16 sont par exemple formées par extrusion.

Les étapes 102 et 104 peuvent être réalisées simultanément par co extrusion des couches interne et intermédiaire 10, 12.

Les couches interne, intermédiaire et externe 10, 12, 16 peuvent être pré vulcanisées lors des étapes de formation 102, 104, 106.

Le procédé 100 comprend en outre l'étape suivante :
(108) vulcaniser les couches interne, intermédiaire et externe 10, 12, 16. Le tuyau 1 peut être par exemple agencé dans un autoclave à une pression par exemple comprise entre 5 bar et 10 bar.

Le procédé 100 comprend optionnellement une étape 110 d'agencement de la couche de renfort 14 autour de la couche intermédiaire avant l'étape 106 de formation de la couche externe 16.

Le procédé 100 comprend optionnellement une étape de post-cuisson 112 du tuyau 1 après l'étape 108 de vulcanisation. L'étape de post-cuisson 112 est par exemple réalisée à une température comprise entre 100°C et 200°C, préférentiellement comprise entre 150°C et 180°C. L'étape de post-cuisson 112 est par exemple réalisée pendant une durée comprise entre 1h et 10h, préférentiellement comprise entre 3h et 5h. L'étape de post-cuisson permet d'améliorer encore plus la résistance au feu de la couche externe 16 sans dégrader ses propriétés mécaniques.

### [Exemples]

### Exemple 1

### Résistance au feu de la couche externe 16

Plusieurs couches externes 16-1, 16-2, 16-3, 16-4 ont été formées par extrusion sur la base des compositions décrites dans le tableau 1. Puis les couches externes 16-1, 16-2, 16-3, 16-4 ont été vulcanisées.

Les couches externes 16-1, 16-2, 16-3, 16-4 ont été ensuite soumises à un essai de combustion vertical selon la figure 8-1 de la norme UL 94-V tel que publié le 14 Février 2013. Les résultats sont présentés dans le tableau 2.

Les résultats ont montré que les couches externes 16-2, 16-3, 16-4 du tableau 1 sont conformes à la norme UL 94-V-0 et sont donc résistantes au feu.

En revanche, la couche externe 16-1 n'est pas conforme à la norme UL 94-V-0. En effet, le taux de charge ignifugeante est insuffisant.

Aussi, les résultats montrent que l'absence d'EPDM dans le second matériau améliore grandement la résistance au feu de la couche externe 16-3.

Une seconde série d'essais de combustion vertical selon la figure 8-1 de la norme UL 94-V tel que publié le 14 Février 2013 a été réalisée sur les couches 16-1, 16-2, 16-3, 16-4 qui ont été préalablement soumises à une étape de post cuisson à une température de 175°C durant 4h.

Les résultats ont également permis de montrer que la résistance au feu des couches 16-1, 16-2, 16-3, 16-4 est grandement améliorée comparée à des couches non soumises à l'étape de post-cuisson.

**[Tableau 1]**

| | **Proportion (pce)** | | | |
|---|---|---|---|---|
| **Composés** | **Couche externe 16-1** | **Couche externe 16-2** | **Couche externe 16-3** | **Couche externe 16-4** |
| EVA | 100 | 100 | 100 | 100 |
| Hydroxyde d'aluminium | 40 | 100 | 100 | 150 |
| Silice | 35 | 35 | 35 | 35 |
| Activateur de vulcanisation | 1 | 1 | 1 | 1 |
| Agent de vulcanisation | 3 | 3 | 3 | 3 |
| EPDM | 15 | 15 | 0 | 15 |

**[Tableau 2]**

| **Couche externe** | **Durée de combustion résiduelle après la 1^{ère} flamme (secondes) t1** | **Durée de combustion et incandescence résiduelles après la 2^{nde} flamme (secondes) t2+t3** |
|---|---|---|
| **16-1** | 0.8 | 121 |
| **16-2** | 0 | 7 |
| **16-3** | 0 | 0 |
| **16-4** | 0 | 10 |

### Exemple 2

### Propriétés mécaniques de la couche externe

L'allongement à la rupture et le module d'élasticité des couches externe 16-1, 16-2, 16-3, 16-4 précédentes ont été mesurés selon la norme ISO37:2017. Les résultats sont présentés dans le tableau 3 ci-dessous.

Les résultats montrent que l'allongement à la rupture et le module d'élasticité de la couche 16-4 sont dégradés comparés aux couches 16-1, 16-2, 16-3. Les résultats montrent ainsi qu'une proportion trop élevée de charges ignifugeantes réduit drastiquement les propriétés mécaniques de la couche externe 16.

**[Tableau 3]**

| **Couche externe 16** | **Allongement à la rupture (%)** | **Module d'élasticité (MPa)** |
|---|---|---|
| 16-1 | 295 | 2.1 |
| 16-2 | 246 | 2.7 |
| 16-3 | 232 | 2.8 |
| 16-4 | 158 | 3.7 |

## Revendications

1. Tuyau (1) pour le transport d'un fluide, en particulier de refroidissement, pour un véhicule, le tuyau (1) ayant une structure multicouches et comprenant :
- une couche interne (10) définissant un passage interne de circulation du fluide, la couche interne (10) étant formée d'un premier matériau comprenant un élastomère choisi parmi les copolymères d'éthylène-propylène,
- une couche externe (16) formée d'un second matériau comprenant :
- un élastomère choisi parmi les copolymères d'éthylène-acétate de vinyle selon une proportion d'au moins 50 pce, et
- une charge ignifugeante selon une proportion d'au moins 50 pce, le tuyau (1) comprend une couche intermédiaire (12) de liaison agencée entre la couche interne (10) et la couche externe (16) et comportant un mélange d'un copolymère d'éthylène-propylène avec un copolymère d'éthylène-acétate de vinyle ou un polyacrylate ou un copolymère d'éthylène acrylate.

2. Tuyau selon la revendication précédente, **caractérisé en ce que** la charge ignifugeante est choisie parmi les hydroxydes métalliques, par exemple l'hydroxyde d'aluminium ou l'hydroxyde de magnésium ou un mélange de ceux-ci.

3. Tuyau selon la revendication 1, **caractérisé en ce que** la charge ignifugeante est choisie parmi les composés phosphorés, par exemple les composés organophosphorés ou les composés phosphorés azotés ou les chlorophosphates ou les phosphinates métalliques ou un mélange de ceux-ci.

4. Tuyau selon l'une quelconque des revendications précédentes, **caractérisé en ce que** la proportion de charge ignifugeante est d'au moins 70 pce, préférentiellement d'au moins 100 pce.

5. Tuyau selon l'une quelconque des revendications précédentes, **caractérisé en ce que** le second matériau comprend des charges de renfort.

6. Tuyau selon la revendication précédente, **caractérisé en ce que** les charges de renfort comprennent de la silice suivant une proportion inférieure ou égale à 50 pce, préférentiellement inférieure ou égale à 40 pce.

7. Tuyau selon l'une quelconque des revendications précédentes, **caractérisé en ce que** le second matériau comprend des additifs, la proportion de chaque additif étant inférieure ou égale à 10 pce, préférentiellement inférieure ou égale à 5 pce.

8. Tuyau selon la revendication précédente, **caractérisé en ce que** les additifs comprennent du noir de carbone.

9. Tuyau selon l'une quelconque des revendications précédentes, **caractérisé en ce que** le second matériau est vulcanisé au peroxyde.

10. Tuyau selon l'une quelconque des revendications précédentes, **caractérisé en ce que** le second matériau est exempt d'élastomère choisi parmi les copolymères d'éthylène-propylène.

11. Tuyau selon l'une quelconque des revendications précédentes, **caractérisé en ce que** le copolymère d'éthylène-propylène du premier matériau est un terpolymère d'éthylène-propylène et d'un diène non conjugué.

12. Tuyau selon l'une quelconque des revendications précédentes, **caractérisé en ce que** la proportion du copolymère d'éthylène-propylène du premier matériau est de 100 pce.

13. Tuyau selon l'une quelconque des revendications précédentes, **caractérisé en ce que** la proportion de l'éthylène-acétate de vinyle du second matériau est d'au moins 70 pce, préférentiellement de 100 pce.

14. Tuyau selon l'une quelconque des revendications précédentes, **caractérisé en ce qu'**il comprend une couche de renfort (14) agencée entre la couche externe (16) et la couche intermédiaire (12) ou noyée dans la couche externe (16).

15. Circuit de refroidissement pour un véhicule, **caractérisé en ce qu'**il comprend un tuyau (1) selon l'une quelconque des revendications précédentes.

## Patentansprüche

1. Rohr (1) für den Transport eines Fluids, insbesondere eines Kühlfluids, für ein Fahrzeug, wobei das Rohr (1) eine mehrschichtige Struktur aufweist und umfasst:
- eine Innenschicht (10), die einen Innendurchgang für die Zirkulation des Fluids definiert, wobei die Innenschicht (10) aus einem ersten Material gebildet ist, das ein Elastomer umfasst, das aus Ethylen-Propylen-Copolymeren ausgewählt ist,
- eine Außenschicht (16), die aus einem zweiten Material gebildet ist, umfassend:
- ein Elastomer, ausgewählt aus Ethylen-Vinylacetat-Copolymeren, in einem Anteil von mindestens 50 phr, und
- einen flammhemmenden Füllstoff in einem Anteil von mindestens 50 phr, wobei das Rohr (1) eine Verbindungszwischenschicht (12) umfasst, die zwischen der Innenschicht (10) und der Außenschicht (16) angeordnet ist und eine Mischung aus einem Ethylen-Propylen-Copolymer mit einem Ethylen-Vinylacetat-Copolymer oder einem Polyacrylat oder einem Ethylen-Acrylat-Copolymer umfasst.

2. Rohr nach dem vorstehenden Anspruch, **dadurch gekennzeichnet, dass** der flammhemmende Füllstoff aus Metallhydroxiden, zum Beispiel Aluminiumhydroxid oder Magnesiumhydroxid oder einer Mischung davon, ausgewählt ist.

3. Rohr nach Anspruch 1, **dadurch gekennzeichnet, dass** der flammhemmende Füllstoff ausgewählt ist aus Phosphorverbindungen, zum Beispiel Organophosphorverbindungen oder Stickstoffphosphorverbindungen oder Chlorphosphaten oder Metallphosphinaten oder einer Mischung davon.

4. Rohr nach einem der vorstehenden Ansprüche, **dadurch gekennzeichnet, dass** der Anteil an flammhemmendem Füllstoff mindestens 70 phr, bevorzugt mindestens 100 phr, beträgt.

5. Rohr nach einem der vorstehenden Ansprüche, **dadurch gekennzeichnet, dass** das zweite Material verstärkende Füllstoffe umfasst.

6. Rohr nach dem vorstehenden Anspruch, **dadurch gekennzeichnet, dass** die verstärkenden Füllstoffe Siliciumdioxid in einem Anteil von weniger als oder gleich 50 phr, bevorzugt weniger als oder gleich 40 phr umfassen.

7. Rohr nach einem der vorstehenden Ansprüche, **dadurch gekennzeichnet, dass** das zweite Material Zusatzstoffe umfasst, wobei der Anteil jedes Zusatzstoffs kleiner oder gleich 10 phr, bevorzugt kleiner oder gleich 5 phr, ist.

8. Rohr nach dem vorstehenden Anspruch, **dadurch gekennzeichnet, dass** die Zusatzstoffe Ruß umfassen.

9. Rohr nach einem der vorstehenden Ansprüche, **dadurch gekennzeichnet, dass** das zweite Material mit Peroxid vulkanisiert ist.

10. Rohr nach einem der vorstehenden Ansprüche, **dadurch gekennzeichnet, dass** das zweite Material frei von einem Elastomer ist, das aus Ethylen-Propylen-Copolymeren ausgewählt ist.

11. Rohr nach einem der vorstehenden Ansprüche, **dadurch gekennzeichnet, dass** das Ethylen-Propylen-Copolymer des ersten Materials ein Terpolymer aus Ethylen-Propylen und einem nicht-konjugierten Dien ist.

12. Rohr nach einem der vorstehenden Ansprüche, **dadurch gekennzeichnet, dass** der Anteil des Ethylen-Propylen-Copolymers des ersten Materials 100 phr beträgt.

13. Rohr nach einem der vorstehenden Ansprüche, **dadurch gekennzeichnet, dass** der Anteil des Ethylenvinylacetats des zweiten Materials mindestens 70 phr, bevorzugt 100 phr, beträgt.

14. Rohr nach einem der vorstehenden Ansprüche, **dadurch gekennzeichnet, dass** es eine Verstärkungsschicht (14) umfasst, die zwischen der Außenschicht (16) und der Zwischenschicht (12) angeordnet oder in die Außenschicht (16) eingebettet ist.

15. Kühlkreislauf für ein Fahrzeug, **dadurch gekennzeichnet, dass** er ein Rohr (1) nach einem der vorstehenden Ansprüche umfasst.

## Claims

1. A pipe (1) for conveying a fluid, in particular a coolant, for a vehicle, the pipe (1) having a multi-layer structure and comprising:
- an inner layer (10) defining an inner passage for fluid circulation, the inner layer (10) being formed of a first material comprising an elastomer selected from ethylene-propylene copolymers,
- an outer layer (16) formed of a second material comprising:
- an elastomer selected from ethylene-vinyl acetate copolymers according to a proportion of at least 50 phr, and
- a flame retardant in a proportion of at least 50 phr,
the pipe (1) comprises:
- an intermediate bonding layer (12) arranged between the inner layer (10) and the outer layer (16) and comprising a mixture of an ethylene-propylene copolymer with an ethylene-vinyl acetate copolymer or a polyacrylate or an ethylene acrylate copolymer.

2. The pipe according to the preceding claim, **characterised in that** the flame retardant is selected from metal hydroxides, for example aluminium hydroxide or magnesium hydroxide or a mixture thereof.

3. The pipe according to claim 1, **characterized in that** the flame retardant is selected from phosphorus compounds, for example organophosphorus compounds or nitrogen phosphorus compounds or chlorophosphates or metal phosphinates or a mixture thereof.

4. The pipe according to any one of the preceding claims, **characterized in that** the proportion of flame retardant is at least 70 phr, preferably at least 100 phr.

5. The pipe according to any one of the preceding claims, **characterized in that** the second material comprises reinforcing fillers.

6. The pipe according to the preceding claim, **characterised in that** the reinforcing fillers comprise silica in a proportion less than or equal to 50 phr, preferably less than or equal to 40 phr.

7. The pipe according to any one of the preceding claims, **characterised in that** the second material comprises additives, the proportion of each additive being less than or equal to 10 phr, preferably less than or equal to 5 phr.

8. The pipe according to the preceding claim, **characterised in that** the additives comprise carbon black.

9. The pipe according to any one of the preceding claims, **characterised in that** the second material is vulcanized with peroxide.

10. The pipe according to any one of the preceding claims, **characterised in that** the second material is free of elastomer selected from ethylene-propylene copolymers.

11. The pipe according to any one of the preceding claims, **characterised in that** the ethylene-propylene copolymer of the first material is an ethylene propylene terpolymer and a non-conjugated diene.

12. The pipe according to any one of the preceding claims, **characterised in that** the proportion of the ethylene-propylene copolymer of the first material is 100 phr.

13. The pipe according to any one of the preceding claims, **characterized in that** the proportion of the ethylene-vinyl acetate of the second material is at least 70 phr, preferably 100 phr.

14. The pipe according to any one of the preceding claims, **characterised in that** it comprises a reinforcing layer (14) arranged between the outer layer (16) and the intermediate layer (12) or embedded in the outer layer (16).

15. A cooling circuit for a vehicle, **characterised in that** it comprises a pipe (1) according to any one of the preceding claims.
